Europäisches Patentamt

European Patent Office

Office européen des brevets

(11) Numéro de publication: **0 433 519 A1**

## DEMANDE DE BREVET EUROPEEN

(21) Numéro de dépôt: **89440143.9**

(22) Date de dépôt: **22.12.89**

(51) Int. Cl.⁵: **G01M 3/12**

(43) Date de publication de la demande:
**26.06.91 Bulletin 91/26**

(84) Etats contractants désignés:
**AT BE CH DE ES FR GB GR IT LI LU NL SE**

(71) Demandeur: **Beltra, Antoine**
**24 Boulevard Jean Ossola**
**F-06700 Saint-Laurent-du-Var(FR)**

(72) Inventeur: **Beltra, Antoine**
**24 Boulevard Jean Ossola**
**F-06700 Saint-Laurent-du-Var(FR)**

(74) Mandataire: **Bossard, Jacques-René**
**Cabinet MEYER & COURTASSOL Bureau**
**EUROPE 20 Place des Halles**
**F-67000 Strasbourg(FR)**

(54) **Banc d'épreuve.**

(57) Procédé pour la recherche des défauts d'étanchéité dans les circuits de fluide de refroidissement d'engins à combustion, et notamment dans les culasses de moteurs à combustion interne, caractérisé en ce qu'il consiste à faire circuler dans le circuit dudit fluide de refroidissement après en avoir préalablement obturé tous les orifices, de l'eau savonneuse à la température de fonctionnement normal du moteur et à repérer les défaut d'étanchéité éventuels par la formation de bulles savonneuses à leur emplacement sur la surface extérieure de ladite culas-se.

FIGURE 1

## BANC D'EPREUVE.

La présente invention concerne une nouvelle installation destinée à la vérification d'une culasse de moteur à combustion interne, ou plus généralement un élément de moteur en vue de rechercher les défauts éventuels d'étanchéité qu'elle peut présenter, cette recherche étant effectuée dans des conditions aussi proches que possible des conditions de fonctionnement normal du moteur.

On sait que les défauts d'étanchéité (fissures ou porosités) peuvent apparaître dès les premières heures de fonctionnement du moteur aussi bien qu'ultérieurement. Il sont également indécelables, même en fin d'usage, et se traduisent par des fuites d'eau dont il s'agit de localiser avec précision l'emplacement afin de procéder à la remise en état de la pièce, si cela est possible.

Divers procédés et appareillages ont déjà été proposé pour procéder à cette vérification et à la recherche des fuites d'eau. En particulier, le déposant a décrit dans son brevet antérieur 2 389 882 un appareil dont la mise en oeuvre consiste à obturer tous les orifices de la culasse à vérifier puis à placer ladite culasse dans un bac rempli d'eau à la température de fonctionnement du moteur, et à injecter dans ladite culasse de l'air sous pression, les défaut d'étanchéité recherchés étant visualisés par l'apparition de bulles d'air dans l'eau du bac aux emplacements desdits défauts.

La présente invention représente un perfectionnement à cet appareillage, qui présentait encore certains inconvénients, dont le principal était la constitution d'un grand volume d'eau très chaude (environ 30 litres à 80°) dans lequel la culasse devait être complètement immergée.

Selon la présente invention, c'est la culasse elle même qui est remplie d'eau, de préférence savonneuse, introduite dans l'admission du circuit de refroidissement et évacuée par la sortie du même circuit, de telle sorte que tout défaut d'étanchéité est révélé par la formation de bulles à son emplacement sur la surface de la culasse.

Bien entendu, comme dans le procédé et l'appareillage décrits au brevet français précité, la culasse est montée rotative sur 360° et tous ses orifices sont préalablement obturés par des plaquettes souples montées comme dans ledit brevet.

L'eau savonneuse chaude évacuée après son passage dans la culasse à vérifier est de préférence recueillie dans un bac dont les parois servent en même temps de protection pour l'opérateur qui doit demeurer éloigné de la culasse chaude rotative.

Les avantages de l'invention sont faciles à comprendre:

En premier lieu, on économise l'énergie nécessaire pour maintenir à 80° une masse d'eau de plusieurs centaines de litres, ainsi que celle nécessaire à la compression de l'air envoyé dans la culasse.

En second lieu, il est plus commode de monter la culasse rotative à l'air libre que dans l'eau. Enfin, il est plus facile de déceler des bulles d'eau savonneuse qui apparaissent sur la surface de la culasse, et qui y demeurent, que de localiser l'origine des bulles d'air, inévitablement fugaces et mobiles.

C'est pourquoi la présente invention représente un progrès important dans la vérification des fuites d'eau dans les corps des moteurs à combustion interne, et plus généralement dans les circuits de fluide de refroidissement de tous engins à combustion.

Outre le procédé qui vient d'être décrit, l'invention concerne également deux types de dispositifs rotatifs, destinés à être montés dans la partie supérieure du bac et qui permettent de monter la culasse de façon rapide en maintenant toutefois une visibilité suffisante pour procéder à l'examen d'éventuelles fuites.

Le but de la conception est double : d'une part assurer un bon arrimage de la culasse à observer, puisque celle-ci doit pouvoir supporter une rotation complète, et d'autre part laisser le maximum de surface externe de ladite culasse accessible à l'examen, de façon à assurer un examen correct. Bien entendu, à ceci s'ajoute un souci d'ergonomie qui implique que le calage de la pièce à observer soit facilement réalisable.

A cet effet, le dispositif rotatif, qui se trouve dans une cuve fixe, est constitué d'un châssis tubulaire rectangulaire entourant la culasse à vérifier, et à partir duquel se développent de part et d'autre du plan médian des moyens de serrage de la culasse respectant les impératifs évoqués ci-avant.

Dans le premier cas décrit, on trouve d'un côté des traverses parallèles audit plan médian qui est en réalité le plan du châssis tubulaire rectangulaire, alors que l'autre côté comprend des moyens de serrage un peu plus complexes. Il s'agit en l'occurrence d'une plaque en matériau transparent qui vient exercer une pression sur les plaquettes à garniture d'étanchéité, cette pression étant exercée grâce au serrage de deux traverses par des écrous serrables à la main.

Lorsque la plaque de matériau transparent est positionnée sur l'élément de moteur à contrôler et que les traverses correspondantes ont été serrées à la main, le dernier serrage est bien évidemment effectué par le biais d'une clé qui ramène les traverses opposées dans la direction de la plaque transparente par un mécanisme à tige filetée et boulon.

Dans le second cas étudié, les traverses opposées sont réglables par valeurs discrètes, et positionnées sans possibilité de réglage une fois que l'élément de moteur à contrôler est placé.

Le serrage s'effectue par un croisement d'éléments tubulaires métalliques située sur le côté opposé à celui des traverses à réglage par valeurs discrètes. La pression sur les plaquettes d'étanchéité se fait par l'intermédiaire de deux longerons placés longitudinalement et qui sont serrés par boulonnage d'une traverse transversale.

Ces dispositifs vont être étudiés plus précisément dans la partie qui suit, en se référant aux quatre figures placées en annexe, qui représentent:

- la figure 1, une vue de face du premier dispositif en position initiale,
- la figure 2, une perspective vue de côté du même dispositif,
- la figure 3 une vue de face du second dispositif, également en position initale, et
- la figure 4 en est une vue de côté.

Par les termes "position initiale", on entend la position avant rotation, au cours du placement de l'élément moteur.

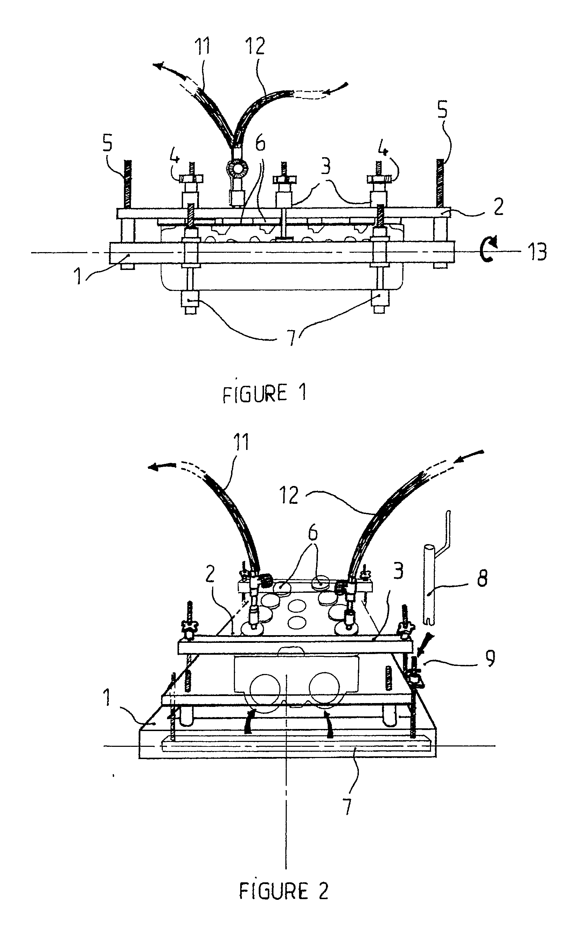

En référence à la figure 1, le châssis (1) est surmonté de la plaque transparente (2), elle-même en contact avec des traverses supérieures (3) que l'on peut serrer partiellement à la main grâce aux écrous à croisillon ou des écrous étoiles (4).

La plaque transparente est positionnée sur la face supérieure de la culasse (c'est l'élément de moteur pris comme exemple dans ce cas), centrée sur quatre tiges (5) disposées aux coins. En réalité, cette plaque prend appui sur les plaquettes d'étanchéité (6) qui obturent les orifices, à l'exception de ceux qui servent au circuit de fluide.

Le serrage définitif s'effectue par le biais des traverses inférieures (7) que l'on ramène vers le haut grâce à la clé (8) selon un mécanisme classique de transformation d'un mouvement rotatif en mouvement transversal, réalisé par une liaison à tige filetée (9) et boulon (10).

L'eau savonneuse est injectée par l'intermédiaire de la tuyauterie (11) et récupérée en sortie (12) (voir en figures 1,2).

L'ensemble décrit est rotatif autour de l'axe (13) qui est celui de la rotation des palliers reliés à la cuve fixe sur laquelle est placé l'ensemble.

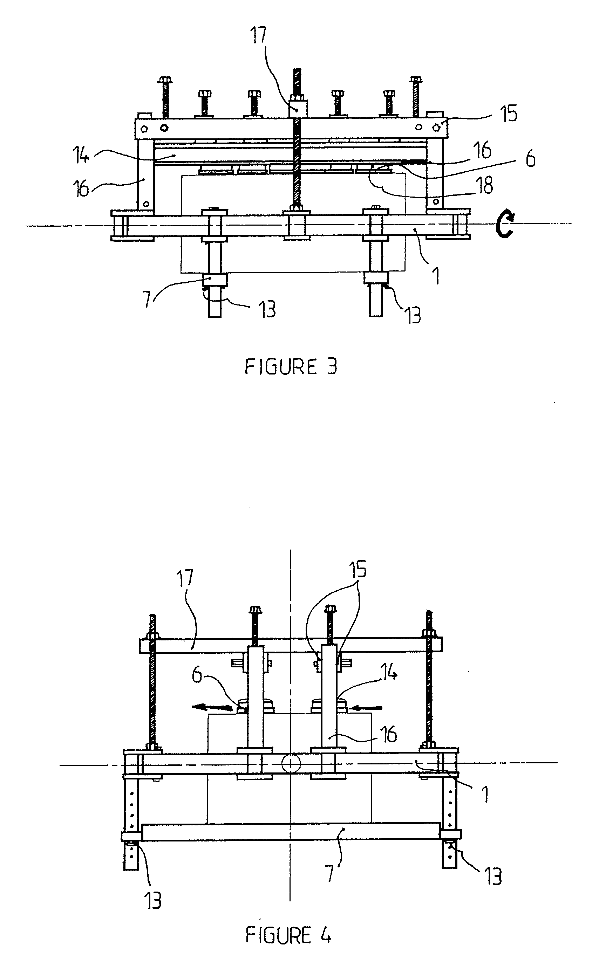

Une variante est présentée en figures 3, 4. Les traverses (7) placées sous le châssis en position initiale sont réglables à certaines positions discrètes par taquets (13) que l'on place sous lesdites traverses (7). Le serrage final ne peut donc pas être effectué par ce biais.

Les moyens de serrage additionnels, situés au dessus du châssis (1) en position initiale, sont constitués de longerons et traverses permettant d'imprimer une pression verticale uniformément répartie sur les plaquettes d'étanchéité (6) et les cales qui y sont associées.

Deux ensembles longitudinaux symétriques sont composés chacun desdits longerons (14) fixés sous deux barres horizontales (15) rapportées à leurs deux extrémités à des tubulures verticales (16) fixées sur le châssis. Ces ensembles constituent des sortes de portiques de serrage.

Par dessous le tout, une traverse transversale (17) est destinée à assurer l'ultime serrage, de sorte que l'élément de moteur à contrôler soit correctement arrimé.

L'ensemble des serrage se fait par l'intermédiaire de liaisons à tiges filetées et boulons-écrous. Dans le cas de ce deuxième exemple de réalisation, au contraire du cas précédent, le serrage se fait par le haut, en considérant bien entendu la position initiale de l'ensemble du dispositif, par serrage d'écrous qui sont représentés sur les figures 3 et 4.

Les traverses (7) opposées reposent sur des taquets (13) insérés dans des orifices correspondant de tubes cylindriques verticaux (19) rapportés sur le châssis.

L'injection et la récupération des liquides ne sont pas explicitement représentées ici, mais elles se font directement au niveau des cales, au niveau des flèches représentées en figure 4. En figure 3, on a figuré un orifice (18) par lequel on établit la liaison avec le circuit de fluide.

Sur ces figures 3 et 4, de la même manière que sur les figures 1 et 2, on a figuré par des flèches le mouvement rotatif autour des axes, référencés dans les deux cas par (13). Sur la figure 4, on a fait apparaître l'endroit (20) où se fixe le tourillon permettant la rotation de l'ensemble.

Bien entendu, la description qui précède n'est pas exhaustive des variantes possibles, et elle ne doit par conséquent pas être considérée comme limitative. Au contraire, toute variante de conception qui s'inscrit dans l'esprit de l'invention est englobée par celle-ci.

## Revendications

1. Procédé pour la recherche des défauts d'étanchéité dans les circuits de fluide de refroidissement d'engins à combustion, et notamment dans les culasses de moteurs à combustion interne, caractérisé en ce qu'il consiste à faire circuler dans le circuit dudit fluide de refroidissement après en avoir préalablement obturé tous les orifices, de l'eau savonneuse à la température de fonctionnement normal du moteur et à repérer les défaut d'étanchéité éventuels par la formation de bulles savonneuses à leur emplacement sur la surface extérieure de ladite culasse.

2. Dispositif pour la mise en oeuvre du procédé selon la revendication 1, comprenant une cuve fixe sur laquelle est montée rotative sur 360° autour d'un axe horizontal un châssis (1) tubulaire rectangulaire comprenant l'élément de moteur à contrôler disposé sur des traverses, caractérisé en ce que la distance des traverses audit châssis est réglable et en ce que, du côté opposé aux traverses par rapport au plan du châssis rectangulaire, le dispositif comprend des moyens d'effectuer le serrage complet de l'élément de moteur à contrôler, moyens qui permettent d'assurer l'étanchéité des orifices obturés en laissant toutefois accessible à l'examen la surface extérieure maximale dudit élément.

3. Dispositif selon la revendication 2, caractérisé en ce que le moyen de serrage est constitué d'une plaque transparente (2) surmontée de traverses (3) serrables à la main par des écrous étoiles (4) ou équivalents, le serrage complet étant effectué par des traverses (7) reliées au châssis (1) par des liaisons à tige filetée et boulon (9,10) que l'on peut serrer depuis le côté de la plaque transparente (2) au moyen de clés (8) adaptées.

4. Dispositif selon la revendication 3, caractérisé en ce que les points d'entrée et de sortie des tuyauteries du circuit de fluide sont placés sur la plaque transparente (2), offrant ainsi un accès facile.

5. Dispositif selon la revendication 3, caractérisé en ce que la plaque transparente (2) est positionnée par le truchement de tiges (5) placées aux quatre coins de ladite plaque.

6. Dispositif selon la revendication 2, caractérisé en ce que le moyen de serrage est constitué de deux longerons (14) longitudinaux fixés chacun à deux barres horizontales (15) rapportées à leurs deux extrémités à des tubulures verticales (16) fixées sur le châssis (1), les longerons (14) étant en contact avec les plaquettes d'étanchéité (6) et des cales additionnelles, et en ce qu'une traverse (17) est placée sur les portiques ainsi définis, le serrage de l'ensemble s'effectuant au moyen de tiges filetées et leurs écrous correspondant.

7. Dispositif selon la revendication 6, caractérisé en ce que les traverses (7) opposées aux portiques sont réglables par valeurs discrètes par l'intermédiaire de taquets (13) insérés dans des orifices correspondant de tubes cylindriques verticaux (19) rapportés au châssis (1).

FIGURE 1

FIGURE 2

FIGURE 3

FIGURE 4

**Office européen des brevets**

# RAPPORT DE RECHERCHE EUROPEENNE

Numero de la demande

EP 89 44 0143

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 617 824 (CYBULSKI et al.) <br> * En entier * <br> --- | 1-5 | G 01 M 3/12 |
| A | US-A-3 973 429 (DURGAN et al.) <br> * Colonne 2, lignes 42-68; colonne 3, lignes 1-40; figures 1-2 * <br> ----- | 1,6 | |

DOMAINES TECHNIQUES RECHERCHES (Int. Cl.5)

G 01 M

Le présent rapport a été établi pour toutes les revendications

| Lieu de la recherche | Date d'achèvement de la recherche | Examinateur |
|---|---|---|
| LA HAYE | 27-08-1990 | ZAFIROPOULOS N. |